# EUROPÄISCHE PATENTSCHRIFT

(11) **EP 1 311 776 B1**
(45) Veröffentlichungstag und Bekanntmachung des Hinweises auf die Patenterteilung: **23.03.2005**
(21) Anmeldenummer: 01962894.0
(22) Anmeldetag: 01.08.2001
(51) Int. Cl.: F16D 65/092

(54) **BREMSBACKE MIT NUTEN IM REIBBELAG**
BRAKE SHOE WITH GROOVED FRICTION LINING
MACHOIRE DE FREIN COMPORTANT DES RAINURES DANS LA GARNITURE DE FRICTION

(30) Priorität: 23.08.2000 DE 10041294
(43) Veröffentlichungstag der Anmeldung: 21.05.2003
(73) Patentinhaber: TMD Friction GmbH, 51381 Leverkusen (DE)
(72) Erfinder: HOFFRICHTER, Wolfgang, 51061 Köln (DE); SCHNELL, Wilfried, 51789 Lindlar (DE); WIATEREK, Christian, 51519 Odenthal (DE); KURZ, Gerhard, 86179 Augsburg (DE); EICHNER, Georg, 85737 Ismaning (DE)
(74) Vertreter: Dallmeyer, Georg, Dipl.-Ing.
(86) Internationale Anmeldenummer: PCT/EP2001/008915
(87) Internationale Veröffentlichungsnummer: WO 2002/016794

(56) Entgegenhaltungen:
- EP-A- 0 423 057
- WO-A-00/04301
- WO-A-97/25549
- DD-A- 238 425
- DE-A- 4 231 549
- GB-A- 488 382
- US-A- 1 239 448
- US-A- 4 273 219

## Beschreibung

Die Erfindung betrifft eine Bremsbacke nach dem Oberbegriff des Anspruchs 1.

Derartige Bremsbacken sind insbesondere für Scheibenbremsen von Kraftfahrzeugen geeignet und weisen eine Trägerplatte aus Metall auf, auf der ein Reibbelag vorzugsweise durch Kleben befestigt ist. Zwischen dem Reibbelag und der Trägerplatte kann eine Zwischenschicht angeordnet sein, die einerseits schwingungsdämpfend wirkt und andererseits den Reibbelag mit der Trägerplatte verklebt.

Es sind Reibbeläge bekannt, bei denen Füllmaterial in Aussparungen gefüllt ist. Die US 1,239,448 beschreibt einen Bremsklotz für Stempelbremsen, bei zur Materialersparnis der Reibbelag mit einer Aussparung versehen ist, die mit Schmier-, Reib-, Kühlmitteln oder ähnlichem gefüllt sind.

Im US-Patent 4,273,219 ist vorgesehen, an der Oberfläche der Aussparungen mit Harz zu versehen, sodass die Anbremseigenschaften eines Bremsbelages aufgrund von gleichmäßigeren Reibkoeffizienten des Bremsbelages verbessert werden.

In EP 0 423 057 ist vorgesehen, dass eine zwischen dem Reibbelag und der Trägerplatte angeordnete Schicht oder in den Nuten angeordneten Schichten aus elastomeren Material zur Dämpfung von Geräuschentwicklung während des Bremsvorgangs dienen. Alternativ sind Beimengungen von elastomeren Partikeln in die Reibbelagmischung vorgesehen.

Ferner sind Reibbeläge bekannt, die nach außen zum Randbereich und zur Bremsscheibe einer Scheibenbremse hin offene Nuten in einem bestimmten Muster aufweisen, die sich in der Tiefe mindestens bis zur Zwischenschicht erstrecken.

Ein Nachteil der bekannten Reibbeläge besteht darin, dass die Festigkeit der Reibbeläge gering ist und ein Ausbrechen von Reibbelagabschnitten bei hoher mechanischer Belastung der Bremsbacke nicht ausgeschlossen ist.

Der Erfindung liegt die Aufgabe zugrunde, eine Bremsbacke zu schaffen, die bei hoher mechanischer Festigkeit beim Bremsvorgang auftretende Momentenschwankungen reduzieren kann.

Zur Lösung dieser Aufgabe dienen die Merkmale des Anspruchs 1.

Die Erfindung sieht in vorteilhafter Weise vor, dass zur Reduzierung von Momentenschwingungen beim Bremsvorgang die Nuten mit einem elastischen, nicht aus Reibmaterial bestehenden Füllmaterial ausgefüllt sind. Das Füllmaterial verbindet die zwischen den Nuten befindlichen Belagabschnitte, so dass die Festigkeit des Reibbelags insgesamt erhöht wird. Die verringerte Steifigkeit des Belages erlaubt es, dass sich der Reibbelag besser an Unebenheiten einer Bremsscheibe anpassen kann, da der Reibbelag sich elastisch verformen kann. Dies führt zu einer Vermeidung von Rubbelgeräuschen und Vibrationen aufgrund der Reduzierung der Momentenschwankungen. Das durch Formfehler der Bremsscheibe oder sogenannte Hot-spots auf der Bremsscheibe verursachte Rubbeln, das sich in Lenkraddrehschwingungen, Pedalpulsieren und Brummen äußert wird verringert. Hot-spots sind Stellen mit lokaler Übertemperatur auf der Bremsscheibe, die durch ihre Ausdehnung zu lokalen Erhöhungen auf der Scheibe führen und somit Schwingungen verursachen. Das zwischen den Nuten angeordnete Füllmaterial führt letztlich auch zu einer Geräuschdämpfung. Außerdem wird eine Verbesserung der Fadingeigenschaften erreicht, da eine bessere Entgasung des Reibbelages ermöglicht wird. Schließlich kann auch eine bessere Abfuhr von Verschleißpartiklen erfolgen.

Zwischen der Trägerplatte und dem Reibbelag ist eine schwingungsdämpfende Zwischenschicht angeordnet.

Bei einem ersten Ausführungsbeispiel ist vorgesehen, dass das Füllmaterial in den Nuten aus einem ausgehärteten Flüssigharz besteht.

Alternativ kann das Füllmaterial aus einem flüssigen Kautschuk in Latexphase, einer pastösen Gummimischung oder aus Silikon bestehen.

Schließlich kann das Füllmaterial aus Harzen, aus Novolak, oder Resolen, die unmodifiziert oder organisch bzw. anorganisch modifiziert sind, bestehen.

Die vorgenannten Füllmaterialien können Abrasivstoffe oder Schleifpartikel enthalten.

Desweiteren kann das Füllmaterial organische und/oder anorganische Fasern, z.B. Metallfasern, zur Verstärkung des Füllmaterials enthalten.

Der E-Modul des elastischen Füllmaterials beträgt 0,01 bis 10 KN/mm², vorzugsweise 0,1 bis 5 KN/mm².

Die Nuten sind bevorzugt parallel und/oder orthogonal zu einer radialen Symmetrieachse des Reibbelages angeordnet.

Die Nuten können alternativ auch bezogen auf die Drehachse einer Scheibenbremse radial in dem Reibbelag verlaufen.

Nach einer weiteren Alternative sind die Nuten spiegelsymmetrisch zu einer radialen Symmetrieachse des Reibbeläge angeordnet.

Nach einer weiteren Alternative ist vorgesehen, dass die Nuten unter einem Winkel zu einer radialen Symmetrieachse des Reibbelages verlaufen.

Die Nuten können auch nur teilweise mit Füllmaterial ausgefüllt sein.

Im folgenden werden unter Bezugnahme auf die Zeichnungen Ausführungsbeispiele der Erfindung und ein Beispiel näher erläutert:

Es zeigen:
- Fig. 1: einen Reibbelag mit orthogonal zueinander verlaufenden Nuten,
- Fig. 2: einen Schnitt entlang der Linie II-II in Fig. 1, und
- Fig. 3: ein Beispiel ohne Zwischenschicht.

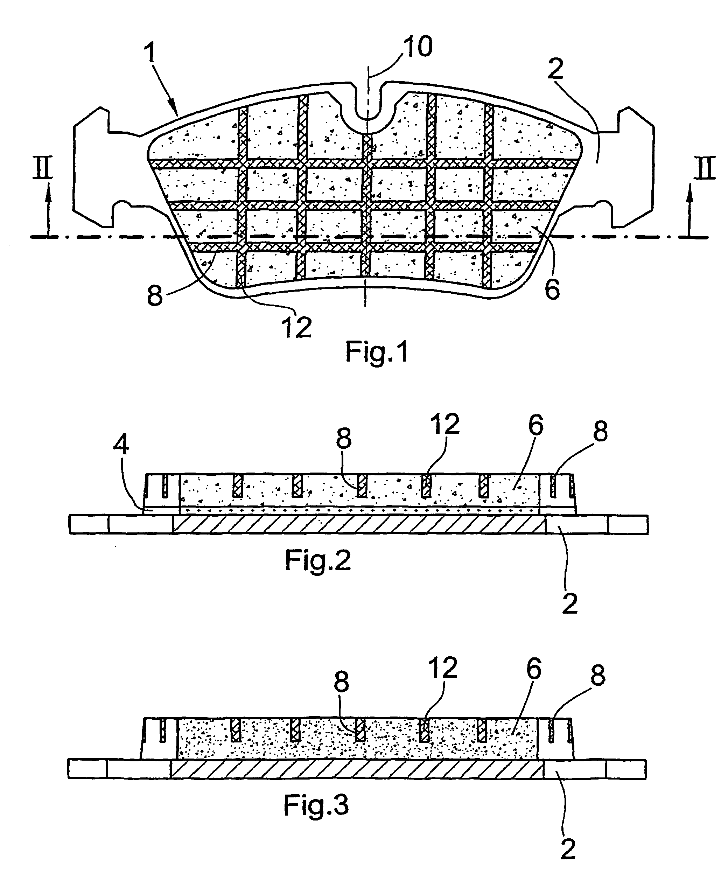

Die in Fig. 1 gezeigte Bremsbacke 1 für eine Scheibenbremse von Kraftfahrzeugen weist eine Trägerplatte 2 auf, auf der ein Reibbelag 6 aufgeklebt ist, in dem zur Bremsscheibe der Scheibenbremse und zum Randbereich des Reibbelages 6 offene Nuten 8 in einem Nutmuster angeordnet sind, wobei die Nuten 8 einerseits parallel zu einer Symmetrieachse 10 der Bremsbacke 1 verlaufen und andererseits orthogonal dazu, so dass sie ein Nutenraster bilden, durch das der Reibbelag 6 in eine Vielzahl von Belagabschnitte unterteilt wird.

Die Nuten 8 sind mit einem Füllmaterial 12 ausgefüllt, das die Belagabschnitte untereinander elastisch verbindet, wobei das Füllmaterial fest an den Wandungen der Belagabschnitte anhaftet und somit die Festigkeitserhöhung des in Belagabschnitte unterteilten Reibbelages 6 bewirkt.

Als Füllmaterial 12' sind unterschiedliche Materialien einsetzbar:

Das Füllmaterial 12 kann beispielsweise aus einem unmodifizierten oder modifizierten Flüssigharz bestehen, das durch Polyaddition, Polykondensation oder radikalische Polymerisation ausgehärtet wird.

Alternativ kann das Füllmaterial 12 aus einem flüssigen Kautschuk in Latexphase, aus einer pastösen Gummimischung oder aus Silikon bestehen.

Als Füllmaterial kann auch Novolak eingesetzt werden, das fest in Lösungsmittel eingebracht wird. Das Lösungsmittel kann unter Temperatur ausgetrocknet werden, wobei Novolak bei einer Temperatur bis zu 200°C ausgehärtet werden kann.

Alle vorgenannten Füllmaterialien 12 können versetzt sein mit Abrasivstoffen/Schleifpartikel als Reibstützer, und/oder mit organischen oder anorganischen Fasern zur mechanischen Stabilisierung. Die anorganischen Fasern können künstliche Mineralfasern, z.B. Steinwolle, und/oder Metallfasern sein, z.B. Stahl-, Kupfer-, Messing-, Bronze-Fasern in Form von Wolle oder in Spanform.

Aus Fig. 2 ist ersichtlich, dass die Nuten 8 nicht bis an die Zwischenschicht 4 oder bis zur Trägerplatte 2 reichen. Die Nuten können auch abweichend von den Darstellungen in den Fign. 2 und 3 nicht vollständig mit Füllmaterial 12 ausgefüllt sein.

Fig. 3 zeigt ein Beispiel ohne Zwischenschicht 4.

## Patentansprüche

1. Bremsbacke (1), insbesondere für eine Scheibenbremse von Kraftfahrzeugen, mit einer Trägerplatte (2), auf der ein Reibbelag (6) befestigt ist, in dem nach außen zum Randbereich und zur Bremsscheibe der Scheibenbremse hin offene Nuten (8) in einem Nutmuster angeordnet sind, wobei die Nuten (8) mit einem nicht aus Reibmaterial bestehenden Füllmaterial (12) ausgefüllt sind,
**dadurch gekennzeichnet,**
**dass** zur Reduzierung von Momentenschwingungen beim Bremsvorgang
- die Nuten (8) ein Nutenraster bilden, durch das der Reibbelag (6) in eine Vielzahl von Belagabschnitten unterteilt ist,
- das Füllmaterial (12) elastisch ist und in den Nuten (8) an den Wandungen der Belagabschnitte anhaftet und die Belagabschnitte elastisch untereinander verbindet, und
- zwischen der Trägerplatte (2) und dem Reibbelag (6) eine schwingungsdämpfende Zwischenschicht (4) angeordnet ist.

2. Bremsbacke nach Anspruch 1, **dadurch gekennzeichnet, dass** das Füllmaterial (12) aus einem ausgehärteten Flüssigharz besteht, oder
dass das Füllmaterial (12) aus einem flüssigen Kautschuk in Latexphase besteht, oder
dass das Füllmaterial (12) aus einer pastösen Gummimischung besteht, oder
dass das Füllmaterial (12) aus Silikon besteht, oder
dass das Füllmaterial (12) aus Harzen, aus Novolak oder Resolen, die unmodifiziert oder organisch oder anorganisch modifiziert sind, besteht.

3. Bremsbacke nach Anspruch 1 oder 2, **dadurch gekennzeichnet, dass** das Füllmaterial (12) Abrasivstoffe/Schleif-material enthält, oder dass das Füllmaterial (12) organische und/oder anorganische Fasern enthält, oder dass das Füllmaterial (12) Metallfasern enthält.

4. Bremsbacke nach einem der Ansprüche 1 bis 3, **dadurch gekennzeichnet, dass** der E-Modul des elastischen Füllmaterials 0,01 bis 10 KN/mm², vorzugsweise 0,1 bis 5 KN/mm² beträgt.

5. Bremsbacke nach einem der Ansprüche 1 bis 4, **dadurch gekennzeichnet, dass** die Nuten (8) parallel und/oder orthogonal zu einer radialen Symmetrieachse (10) des Reibbelages (6) angeordnet sind.

6. Bremsbacke nach einem der Ansprüche 1 bis 5, **dadurch gekennzeichnet, dass** die Nuten (8) relativ zur Drehachse der Scheibenbremse radial in dem Reibbelag (6) verlaufen.

7. Bremsbacke nach einem der Ansprüche 1 bis 6, **dadurch gekennzeichnet, dass** die Nuten (8) spiegelsymmetrisch zu einer radialen Symmetrieachse (10) des Reibbelages (6) verlaufen.

8. Bremsbacke nach einem der Ansprüche 1 bis 7, **dadurch gekennzeichnet, dass** die Nuten (8) unter einem Winkel zu einer radialen Symmetrieachse (10) des Reibbelages (6) verlaufen.

9. Bremsbacke nach einem der Ansprüche 1 bis 8, **dadurch gekennzeichnet, dass** die Nuten nur teilweise mit Füllmaterial (12) aufgefüllt sind.

## Claims

1. Brake shoe (1), particularly for a disk brake of motor vehicles, comprising a carrier plate (2) on which a friction lining (6) is fastened, in which grooves (8) open outwardly toward the border region and toward the brake disk of the disk brake are arranged in a groove pattern, the grooves (8) being filled up with a filler (12) that does not consist of abrasive material,
**characterized in**
**that** for the reduction of moment vibrations during the braking procedure,
- the grooves (8) form a groove grid by which the friction lining (6) is divided into a plurality of lining sections,
- the filler (12) is elastic and adheres at the walls of the lining sections in the grooves (8) and elastically interconnects the lining sections, and
- a vibration-damping intermediate layer (4) is arranged between the carrier plate (2) and the friction lining (6).

2. Brake shoe according to claim 1, **characterized in**
**that** the filler (12) consists of a cured liquid resin or
**that** the filler (12) consists of a liquid caoutchouc in latex phase or
**that** the filler (12) consists of a pasty rubber mixture or
**that** the filler (12) consists of silicone or
**that** the filler (12) consists of resins, of novolak or resoles that are unmodified or organically or inorganically modified.

3. Brake shoe according to claim 1 or 2, **characterized in that** the filler (12) contains abrasive substances/grinding material or that the filler (12) contains organic and/or inorganic fibers or that the filler (12) contains metal fibers.

4. Brake shoe according to one of claims 1 to 3, **characterized in that** the modulus of elasticity of the elastic filler amounts to 0.01 to 10 KN/mm², preferably 0.1 to 5 KN/mm².

5. Brake shoe according to one of claims 1 to 4, **characterized in that** the grooves (8) are arranged in parallel and/or orthogonal to a radial axis of symmetry (10) of the friction lining (6).

6. Brake shoe according to one of claims 1 to 5, **characterized in that** relative to the rotational axis of the disk brake, the grooves (8) extend radially in the friction lining (6).

7. Brake shoe according to one of claims 1 to 6, **characterized in that** the grooves (8) extend mirror-symmetrically to a radial axis of symmetry (10) of the friction lining (6).

8. Brake shoe according to one of claims 1 to 7, **characterized in that** the grooves (8) extend at an angle to the radial axis of symmetry (10) of the friction lining (6).

9. Brake shoe according to one of claims 1 to 8, **characterized in that** the grooves are only partially filled up with filler (12).

## Revendications

1. Mâchoire de frein (1), en particulier pour un frein à disque de véhicules automobiles, comportant une plaque de support (2), sur laquelle est fixée une garniture de friction (6) dans laquelle des rainures (8), ouvertes vers l'extérieur en direction de la région de bordure et du disque de frein du frein disque, sont disposées suivant un motif de rainures, les rainures (8) étant remplies d'une matière de remplissage (12) ne se composant pas de matière de friction,
**caractérisée en ce que**, pour réduire les vibrations, momentanées lors du processus de freinage,
- les rainures (8) forment une trame de rainures, par laquelle la garniture de friction (6) est divisée en une pluralité de portions de garniture,
- la matière de remplissage (12) est élastique et adhère dans les rainures (8) aux parois des portions de garniture et relie les portions de garniture élastiquement entre elles, et
- une couche intermédiaire (4) amortissant les vibrations est disposée entre la plaque de support (2) et la garniture de friction (6).

2. Mâchoire de frein selon la revendication 1,
**caractérisée en ce que**
la matière de remplissage (12) se compose d'une résine liquide durcie, ou
la matière de remplissage (12) se compose d'un caoutchouc liquide en phase latex, ou
la matière de remplissage (12) se compose d'un mélange de caoutchoucs pâteux, ou
la matière de remplissage (12) se compose de silicone, ou
la matière de remplissage (12) se compose de résines, de Novolak ou de Résol qui sont modifiés ou non du point de vue organique ou minéral.

3. Mâchoire de frein selon la revendication 1 ou 2, **caractérisée en ce que** la matière de remplissage (12) contient des matières ou des substances abrasives, ou **en ce que** la matière de remplissage (12) contient des fibres organiques et/ou minérales, ou **en ce que** la matière de remplissage (12) contient des fibres métalliques.

4. Mâchoire de frein selon l'une des revendications 1 à 3, **caractérisée en ce que** le module d'élasticité de la matière de remplissage élastique est compris entre 0,01 et 10 KN/mm², de préférence entre 0,1 et 5 KN/mm².

5. Mâchoire de frein selon l'une des revendications 1 à 4, **caractérisée en ce que** les rainures (8) sont disposées parallèlement et/ou orthogonalement à un axe de symétrie radial (10) de la garniture de friction (6).

6. Mâchoire de frein selon l'une des revendications 1 à 5, **caractérisée en ce que** les rainures (8) s'étendent radialement dans la garniture de friction (6) par rapport à l'axe de rotation du frein à disque.

7. Mâchoire de frein selon l'une des revendications 1 à 6, **caractérisée en ce que** les rainures (8) s'étendent en symétrie de miroir par rapport un axe de symétrie radial (10) de la garniture de friction (6).

8. Mâchoire de frein selon l'une des revendications 1 à 7, **caractérisée en ce que** les rainures (8) s'étendent sous un angle par rapport à un axe de symétrie radial (10) de la garniture de friction (6).

9. Mâchoire de frein selon l'une des revendications 1 à 8, **caractérisée en ce que** les rainures ne sont que partiellement remplies de matière de remplissage (12).
